# EUROPEAN PATENT SPECIFICATION

(11) **EP 4 253 447 B1**
(45) Date of publication and mention of the grant of the patent: **04.11.2026**
(21) Application number: 22902467.4
(22) Date of filing: 29.04.2022
(51) Int. Cl.: C08G 67/02

(54) **METHOD FOR PREPARING ALIPHATIC POLYKETONE BY MEANS OF CONTINUOUS SOLUTION POLYMERIZATION METHOD, AND ALIPHATIC POLYKETONE**
VERFAHREN ZUR HERSTELLUNG EINES ALIPHATISCHEN POLYKETONS MITTELS EINES KONTINUIERLICHEN LÖSUNGSPOLYMERISATIONSVERFAHRENS UND ALIPHATISCHES POLYKETON
PROCÉDÉ DE PRÉPARATION DE POLYCÉTONE ALIPHATIQUE AU MOYEN D'UN PROCÉDÉ DE POLYMÉRISATION EN SOLUTION CONTINUE, ET POLYCÉTONE ALIPHATIQUE

(30) Priority: 11.02.2022 CN 202210128845
(43) Date of publication of application: 04.10.2023
(73) Proprietor: Chambroad Chemical Industry Research Institute Co., Ltd., Binzhou, Shandong 256500 (CN)
(72) Inventor: PEI, Lijun, Binzhou, Shandong 256500 (CN); REN, Zhaoyu, Binzhou, Shandong 256500 (CN); LIU, Yingxian, Binzhou, Shandong 256500 (CN); WANG, Pengpeng, Binzhou, Shandong 256500 (CN); CAO, Liyan, Binzhou, Shandong 256500 (CN); ZHANG, Pengpeng, Binzhou, Shandong 256500 (CN); WANG, Ruijing, Binzhou, Shandong 256500 (CN)
(74) Representative: Witte, Weller & Partner Patentanwälte mbB
(86) International application number: PCT/CN2022/090287
(87) International publication number: WO 2023/151192

(56) References cited:
- EP-A1- 0 788 405
- CN-A- 101 137 695
- CN-A- 111 607 077
- CN-A- 112 011 048
- CN-A- 112 839 980
- JP-A- 2001 098 066
- KR-B1- 101 145 176
- KR-B1- 102 134 158

## Description

### CROSS REFERENCE TO RELATED APPLICATIONS

This disclosure claims the priority of Chinese Patent Application No. 202210128845.3, filed with the China National Intellectual Property Administration on February 11, 2022, and titled with "METHOD FOR PREPARING ALIPHATIC POLYKETONE BY CONTINUOUS SOLUTION POLYMERIZATION PROCESS AND ALIPHATIC POLYKETONE".

### FIELD

The present disclosure relates to the field of chemical industry, and in particular to a method for preparing aliphatic polyketone by continuous solution polymerization process and aliphatic polyketone.

### BACKGROUND

Carbon monoxide is the main by-product of many petroleum, coal and other energy and petrochemical industries. Converting carbon monoxide into high value-added products is an important part of the chemical industry. Nowadays, with the decreasing of oil resources day by day and the increasingly serious resource crisis, under the background of "carbon neutrality", the development of one-carbon chemical industry has very important practical significance and broad development prospects. Polyketone (POK) is a new type of green polymer material obtained by copolymerization of carbon monoxide and olefin, wherein the carbon monoxide accounts for about 50% of the total mass of polyketone. POK has excellent environmental friendliness in terms of raw material composition and energy consumption, and has excellent impact strength, chemical resistance, abrasion resistance, gas barrier property and flame retardancy, which can replace PA, PBT, POM, EVOH and other materials in automotive, electronics and packaging application fields, leading to a wide range of application prospects.

The research and development of polyketone began in the 1940s. At present, only Hyosung Group in South Korea has realized the industrialization of polyketone, the production process of which is a slurry polymerization process. The research on polyketone by domestic and foreign institutions is limited to the existing slurry polymerization process, while the polyketone solution polymerization process has not been reported in the literature. KR 102134158B1 discloses a method for manufacturing a polyketone, including a step of copolymerizing carbon monoxide, an ethylenically unsaturated compound and one or more olefinically unsaturated hydrocarbon compounds in the presence of a catalyst. CN 111607077 A discloses a preparation method of polyketone, comprising carrying out polymerization reaction on carbon monoxide and olefin in a solvent containing a tin compound, a catalyst and a ligand. The traditional batch slurry polymerization process has problems such as difficulty in controlling the morphology of polymer particles, easy material hanging on the wall, low single-pot yield and poor product repeatability. In addition, the increase of insoluble products in the process of kettle slurry polymerization will result in difficult mass transfer and heat transfer in the reaction process, which also brings technical difficulties and safety risks to the industrial production of polyketone.

### SUMMARY

In view of this, the purpose of the present disclosure is to provide a new method for preparing aliphatic polyketone by continuous solution polymerization process and a prepared aliphatic polyketone. The new method provided by the present disclosure can solve the problems in the slurry process such as difficulty in controlling the morphology of polymer particles, easy material hanging on the wall, low single-pot yield, poor product repeatability, poor mass and heat transfer, ensuring the smoothness of the polyketone production process and greatly improving product quality, production capacity and equipment investment.

The present disclosure provides an aliphatic polyketone prepared by continuous solution polymerization process, wherein the aliphatic polyketone is obtained by continuous solution polymerization of carbon monoxide and an olefin compound in a solvent system containing a catalyst; wherein the aliphatic polyketone has a particle size of 10µm~50µm, a particle size distribution width Span of 0.5~0.9, and a bulk density >0.35g/ml.

Preferably, the aliphatic polyketone has a weight average molecular weight >200,000, and a molecular weight distribution <2.0.

Preferably, the solvent system containing a catalyst is a mixed solvent containing a catalyst, a cocatalyst and a cosolvent.

Preferably, the catalyst is an organometallic complex of a divalent palladium salt and a bidentate phosphine ligand;
The divalent palladium salt is one or more of palladium nitrate, palladium sulfate, palladium sulfonate and palladium acetate;
The bidentate phosphine ligand has a structure as shown in formula (I):

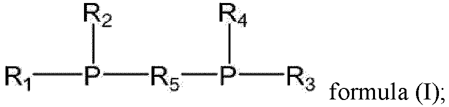

In formula (I), R₁, R₂, R₃ and R₄ are independently selected from phenyl or substituted phenyl, and R₅ is an alkylene group having at least 3 carbon atoms.

Preferably, the cocatalyst is selected from one or more of sulfuric acid, benzenesulfonic acid, perchloric acid, trichloroacetic acid and trifluoroacetic acid.

Preferably, the cosolvent is a carboxylic acid-functionalized imidazolium salt, which has a structure as shown in formula (II):

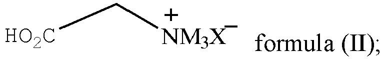

In formula (II), -NM₃ is an imidazole substituent, and X is trifluoroacetate, trifluorosulfonate or hexafluorophosphate.

Preferably, the mixed solvent is a mixed solvent of o-chlorophenol and methanol, a mixed solvent of m-cresol and methanol, a mixed solvent of hexafluoroisopropanol and methanol, or a mixed solvent of DMF and methanol.

The present disclosure also provides a method for preparing the aliphatic polyketone described in the above technical solution by continuous solution polymerization process, comprising the following steps:
a) Continuously feeding carbon monoxide, an olefin compound and a solvent system containing catalyst into a continuous flow reactor for solution polymerization to obtain an aliphatic polyketone.

Preferably, the solution polymerization reaction in step a) is carried out at a temperature of 100°C~110°C, and a pressure of 6.5MPa~7MPa;
The residence time of the solution polymerization reaction is controlled by controlling the feeding rate of the monomer and solvent;
The solution polymerization reaction is carried out using a micro-channel reactor, in which the monomer is continuously feeding, the unreacted monomer is separated and reused, and the product is continuously discharged.

Preferably, the step a) further comprises:
Performing gas-liquid separation on the reaction solution obtained by the polymerization reaction, reusing the gas, and removing the solvent from the liquid to obtain polyketone powder;
A method for removing the solvent is flash evaporation; the recovered solvent can be recycled for use as a mixed solvent.

The present disclosure provides a method for preparing aliphatic polyketone by continuous solution polymerization process and aliphatic polyketone; the method comprises the following steps: a) continuously feeding carbon monoxide, an olefin compound and a solvent system containing catalyst into a continuous flow reactor for solution polymerization to obtain an aliphatic polyketone; wherein the aliphatic polyketone has a particle size of 10 µm~50 µm, a particle size distribution width Span of 0.5~0.9, and a bulk density >0.35 g/ml. Compared with the prior art, in the method provided by the present disclosure, carboxylic acid functionalized imidazolium salts are selected as cosolvents, mixed solvents such as o-chlorophenol and methanol, m-cresol and methanol, hexafluoroisopropanol and methanol, DMF and methanol are selected as solvents of the continuous solution polymerization reaction, and the continuous flow reactor is used for continuous feeding and continuous discharging, which effectively solves problems such as difficulty in controlling the morphology of polymer particles, easy material hanging on the wall, low single-pot yield, and poor product repeatability in the traditional batch slurry process. Aliphatic polyketones with a weight average molecular weight >200,000, a molecular weight distribution <2.0, a bulk density >0.35g/ml, a particle size of 10µm~50µm, and a particle size distribution width Span of 0.5~0.9 can be obtained through the polymerization.

### BRIEF DESCRIPTION OF DRAWINGS

FIG. 1 is the scanning electron microscope image of the polyketone powder prepared in Example 1 of the present disclosure;
FIG. 2 is the scanning electron microscope image of the polyketone powder prepared in Comparative Example 1;

Table 1 is the particle size distribution data of the polyketone powder prepared in Example 1 of the present disclosure;
Table 2 is the particle size distribution data of the polyketone powder prepared in Comparative Example 1;
Table 3 is the particle size distribution data of the polyketone powder prepared in Comparative Example 2;
Table 4 is the particle size distribution data of the polyketone powder prepared in Example 2 of the present disclosure;
Table 5 is the particle size distribution data of the polyketone powder prepared in Example 3 of the present disclosure.

### DETAILED DESCRIPTION

The technical solutions of the present disclosure will be clearly and completely described below with reference to the embodiments of the present disclosure. Obviously, the described embodiments are only a part of the embodiments of the present disclosure, rather than all the embodiments. Based on the embodiments of the present disclosure, all other embodiments obtained by those of ordinary skill in the art without creative efforts shall fall within the protection scope of the present disclosure.

The present disclosure provides an aliphatic polyketone prepared by continuous solution polymerization process, wherein the aliphatic polyketone is obtained by continuous solution polymerization of carbon monoxide and an olefin compound in a solvent system containing catalyst; wherein the aliphatic polyketone has a particle size of 10µm~50µm, a particle size distribution width Span of 0.5~0.9, and a bulk density >0.35g/ml.

In the present disclosure, the aliphatic polyketone has a weight average molecular weight preferably >200,000, and a molecular weight distribution preferably <2.0.

In the present disclosure, the solvent system containing a catalyst is preferably a mixed solvent containing a catalyst, a cocatalyst and a cosolvent. In the present disclosure, the catalyst is preferably an organometallic complex of a divalent palladium salt and a bidentate phosphine ligand; wherein, the divalent palladium salt is preferably one or more of palladium nitrate, palladium sulfate, palladium sulfonate and palladium acetate, more preferably palladium nitrate, palladium sulfate, palladium sulfonate or palladium acetate, further more preferably palladium acetate. In the present disclosure, there is no special restriction on the source of the divalent palladium salt, and commercially available products well known to those skilled in the art may be used.

In the present disclosure, the bidentate phosphine ligand preferably has a structure as shown in formula (I):

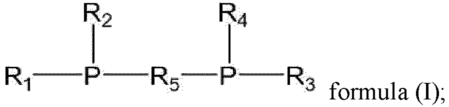

In formula (I), R₁, R₂, R₃ and R₄ are independently selected from phenyl or substituted phenyl, and R₅ is an alkylene group having at least 3 carbon atoms; preferably specifically: 1,3-bis[bis(2-methoxyphenyl)phosphino]propane.

In the present disclosure, the content of the catalyst in the mixed solvent is preferably 0.01-0.05mmol/L, specifically 0.01mmol/L, 0.02mmol/L, 0.03mmol/L, 0.04mmol/L, 0.05mmol/L /L.

In the present disclosure, the cocatalyst is preferably selected from one or more of sulfuric acid, benzenesulfonic acid, perchloric acid, trichloroacetic acid and trifluoroacetic acid, more preferably sulfuric acid, benzenesulfonic acid, perchloric acid, trichloroacetic acid or trifluoroacetic acid, further more preferably trifluoroacetic acid. In the present disclosure, there is no special restriction on the source of the cocatalyst, and any commercially available products of the above-mentioned organic and inorganic strong acids well known to those skilled in the art can be used. In the present disclosure, the molar ratio of the cocatalyst to the catalyst is preferably (10~2):1, specifically 10:1, 9:1, 8:1, 7:1, 6:1, 5:1 , 4:1, 3:1, 2:1.

In the present disclosure, the cosolvent is preferably a carboxylic acid functionalized imidazolium salt, which has a structure as shown in formula (II):

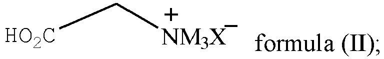

In formula (II), -NM₃ is an imidazole substituent, and X is trifluoroacetate, trifluorosulfonate or hexafluorophosphate. In the present disclosure, the cosolvent can improve the solubility of monomers and products in the solvent and enhance the mass transfer effect. In the present disclosure, the molar ratio of the cosolvent to the catalyst is preferably (5-15):1, more preferably 10:1.

In the present disclosure, the content of the cosolvent in the mixed solvent is preferably 0.1~0.5 mmol/L.

In the present disclosure, the mixed solvent is preferably a mixed solvent of o-chlorophenol and methanol, a mixed solvent of m-cresol and methanol, a mixed solvent of hexafluoroisopropanol and methanol or a mixed solvent of DMF and methanol, more preferably a mixed solvent of hexafluoroisopropanol and methanol. In a preferred embodiment of the present disclosure, the mixed solvent is a mixed solvent of hexafluoroisopropanol and methanol; wherein, the volume ratio of the methanol to hexafluoroisopropanol is preferably 1:(3-6), specifically 1:3, 1:4, 1:5, 1:6.

The present disclosure also provides a method for preparing the aliphatic polyketone described in the above technical solution by continuous solution polymerization process, comprising the following steps:
a) Continuously feeding carbon monoxide, an olefin compound and a solvent system containing catalyst into a continuous flow reactor for solution polymerization reaction to obtain an aliphatic polyketone.

In the present disclosure, the solvent system containing a catalyst is preferably a mixed solvent containing a catalyst, a cocatalyst and a cosolvent. In the present disclosure, firstly a catalyst, a cocatalyst and a cosolvent are dissolved in a mixed solvent to obtain a solvent system containing a catalyst.

In the present disclosure, the catalyst is preferably an organometallic complex of a divalent palladium salt and a bidentate phosphine ligand; wherein, the divalent palladium salt is preferably one or more of palladium nitrate, palladium sulfate, palladium sulfonate and palladium acetate, more preferably palladium nitrate, palladium sulfate, palladium sulfonate or palladium acetate, further more preferably palladium acetate. In the present disclosure, there is no special restriction on the source of the divalent palladium salt, and commercially available products well known to those skilled in the art may be used.

In the present disclosure, the bidentate phosphine ligand preferably has a structure as shown in formula (I):

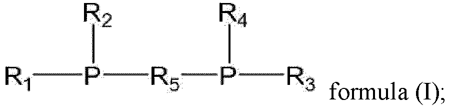

In formula (I), R₁, R₂, R₃ and R₄ are independently selected from phenyl or substituted phenyl, and R₅ is an alkylene group having at least 3 carbon atoms; preferably specifically: 1,3-bis[bis(2-methoxyphenyl)phosphino]propane.

In the present disclosure, the content of the catalyst in the mixed solvent is preferably 0.01-0.05mmol/L, specifically 0.01mmol/L, 0.02mmol/L, 0.03mmol/L, 0.04mmol/L, 0.05mmol/L /L.

In the present disclosure, the cocatalyst is preferably selected from one or more of sulfuric acid, benzenesulfonic acid, perchloric acid, trichloroacetic acid and trifluoroacetic acid, more preferably sulfuric acid, benzenesulfonic acid, perchloric acid, trichloroacetic acid or trifluoroacetic acid, further more preferably trifluoroacetic acid. In the present disclosure, there is no special restriction on the source of the cocatalyst, and any commercially available products of the above-mentioned organic and inorganic strong acids well known to those skilled in the art can be used. In the present disclosure, the molar ratio of the cocatalyst to the catalyst is preferably (10~2):1, specifically 10:1, 9:1, 8:1, 7:1, 6:1, 5:1 , 4:1, 3:1, 2:1.

In the present disclosure, the cosolvent is preferably a carboxylic acid functionalized imidazolium salt, which has a structure as shown in formula (II):

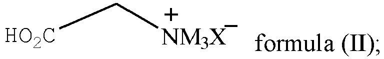

In formula (II), -NM₃ is an imidazole substituent, and X is trifluoroacetate, trifluorosulfonate or hexafluorophosphate. In the present disclosure, the cosolvent can improve the solubility of the monomers and products in the solvent and enhance the mass transfer effect. In the present disclosure, the molar ratio of the cosolvent to the catalyst is preferably (5-15):1, more preferably 10:1.

In the present disclosure, the content of the cosolvent in the mixed solvent is preferably 0.1~0.5 mmol/L.

In the present disclosure, the mixed solvent is preferably a mixed solvent of o-chlorophenol and methanol, a mixed solvent of m-cresol and methanol, a mixed solvent of hexafluoroisopropanol and methanol or a mixed solvent of DMF and methanol, more preferably a mixed solvent of hexafluoroisopropanol and methanol. In a preferred embodiment of the present disclosure, the mixed solvent is a mixed solvent of hexafluoroisopropanol and methanol; wherein, the volume ratio of the methanol to hexafluoroisopropanol is preferably 1:(3-6), specifically 1:3, 1:4, 1:5, 1:6.

In the present disclosure, subsequently, carbon monoxide, an olefin compound and the above mixed solvent containing a catalyst, a cocatalyst and a cosolvent are continuously fed into a continuous flow reactor, and reaction temperature, reaction pressure and residence time are controlled to perform a solution polymerization reaction. In the present disclosure, the solution polymerization reaction is carried out at a temperature of 100°C~110°C, and a pressure of 6.5MPa~7MPa.

In the present disclosure, the residence time of the solution polymerization reaction is preferably controlled by controlling the feeding rate of the monomer and the solvent; the monomer described here is a mixture of carbon monoxide with one or more of olefinic unsaturated compounds, wherein the molar ratio of the olefin to carbon monoxide is preferably (0.5~5):1; the solvent is the mixed solvent described in the above technical solution. In the present disclosure, the solvent can be recycled for use.

In the present disclosure, the solution polymerization reaction is carried out using a micro-channel reactor. The micro-channel reactor is a continuous plug flow reactor capable of realizing efficient heat exchange and mass transfer, and which can make a reaction completed quickly with higher temperature, higher concentration and faster mixing in controlled time and space, so as to achieve the comprehensive effect of improving conversion rate, improving safety and improving efficiency. On this basis, the present disclosure can realize continuous feeding of monomers, separation and reuse of unreacted monomers, and continuous discharge of products.

In the present disclosure, before the reaction starts in the microchannel reactor, firstly nitrogen is introduced for replacement, after the replacement is completed, the heating module of the reactor is heated to the reaction temperature, and then materials are continuously fed into the reactor.

The present disclosure also comprises:
Performing gas-liquid separation on the reaction solution obtained by the polymerization reaction, reusing the gas, and removing the solvent from the liquid to obtain polyketone powder;
A method for removing the solvent is flash evaporation; the recovered solvent can be recycled for use as a mixed solvent.

In the present disclosure, when the system pressure is higher than the reaction pressure, the reaction solution starts to be continuously and stably extracted into a gas-liquid separation equipment for gas-liquid separation; the gas obtained by separation is reused, and the solvent is removed from the liquid to obtain polyketone powder.

In the present disclosure, a method for removing the solvent is preferably flash evaporation, and a flash evaporation tank well known to those skilled in the art can be used; the recovered solvent can be recycled for use as a mixed solvent.

In the present disclosure, the solvent is removed by flash evaporation to obtain polyketone powder with dense and uniform particles, and the solvent is recovered and reused.

In the present disclosure, the continuous solution polymerization process is developed preferably using a micro-channel reactor, in which materials are continuously fed and discharged under the premise of ensuring normal progress of the reaction, solving the problems of wall hanging, poor mass transfer and heat transfer caused by product aggregation in the traditional batch process. After the reaction is completed, the reaction solution is separated, the unreacted monomers are recovered, and preferably the solvent is removed by flash evaporation to obtain a product with uniform and stable particle morphology.

In the present disclosure, the organometallic complex of divalent palladium salt and bidentate phosphine ligand is used as the main catalyst, strong acid is used as the cocatalyst, carboxylic acid functionalized imidazolium salt is used as the cosolvent, and a group of mixed solvents such as o-chlorophenol and methanol, m-cresol and methanol, hexafluoroisopropanol and methanol, DMF and methanol and the like is selected for use as reaction reagents, and the reactants are carbon monoxide, ethylene and propylene gas. The monomer is continuously fed, the reaction temperature, pressure and residence time are controlled, the reaction solution is continuously extracted, the unreacted monomer can be recovered and reused, and the solvent can be removed and reused by flash evaporation to obtain polyketone powder with a weight average molecular weight > 200,000, a molecular weight distribution < 2.0, a powder particle size of 10 µm~50 µm, a particle size distribution width Span of 0.5~0.9, and a bulk density > 0.35g/ml. The slurry polymerization process mentioned in the present disclosure has poor mass transfer and heat transfer effects, so the obtained polyketone product has large and fluffy particles and serious wall hanging problem, which has a powder bulk density of 0.1~0.2g/mL, a powder particle size of 20~480µm, and a particle size distribution width Span of 3.3~4.0; whereas the polyketone product obtained by the solution polymerization process has finer and denser particles with a bulk density > 0.35g/ml, a powder particle size of 10µm~50µm and a particle size distribution width Span of 0.5~0.9.

The present disclosure provides a method for preparing aliphatic polyketone by continuous solution polymerization process and aliphatic polyketone; the method comprises the following steps: a) continuously feeding carbon monoxide, an olefin compound and a solvent system containing catalyst into a continuous flow reactor for solution polymerization to obtain an aliphatic polyketone; wherein the aliphatic polyketone has a particle size of 10 µm~50 µm, a particle size distribution width Span of 0.5~0.9, and a bulk density >0.35 g/ml. Compared with the prior art, in the method provided by the present disclosure, carboxylic acid functionalized imidazolium salts are selected as cosolvents, mixed solvents such as o-chlorophenol and methanol, m-cresol and methanol, hexafluoroisopropanol and methanol, DMF and methanol are selected as solvents of the continuous solution polymerization reaction, and the continuous flow reactor is used for continuous feeding and continuous discharging, which effectively solves problems such as difficulty in controlling the morphology of polymer particles, easy material hanging on the wall, low single-pot yield, and poor product repeatability in the traditional batch slurry process. Aliphatic polyketones with a weight average molecular weight >200,000, a molecular weight distribution <2.0, a bulk density >0.35g/ml, a particle size of 10µm~50µm, and a particle size distribution width Span of 0.5~0.9 can be obtained through the polymerization.

In order to further illustrate the present disclosure, the following examples are used for detailed description. The raw materials used in the following examples of the present disclosure are all commercially available products; the terpolymer of CO, ethylene and propylene was prepared according to the following method.

### Example 1

A main catalyst an organometallic complex of 1,3-bis[bis(2-methoxyphenyl) phosphino]propane and palladium acetate, a cocatalyst trifluoroacetic acid and a cosolvent carboxylic acid functionalized imidazolium salt were added to a quantitative mixture of methanol and hexafluoroisopropanol (V methanol: V hexafluoroisopropanol=1:4), wherein the concentration of the main catalyst was 0.02mmol/L, the concentration of the cocatalyst was 0.08mmol/L, and the concentration of the cosolvent was 0.2 mmol/L. Before the start of the reaction, a microchannel reactor was introduced with nitrogen for replacement. After the replacement was completed, the heating module of the reactor was heated to 100 °C, and then the reactor (the flux of the reactor was 50 ml) was continuously introduced with the mixed solution at a flow rate of 5 ml/min, propylene at a flow rate of 0.6g/min, and a mixed gas of CO and ethylene at a mass ratio of 1:1.1 at a feeding rate of 30g/min. The system was prepared to a reaction pressure of 6.5MPa~7.0MPa, and the residence time was controlled to be 10min. When the system pressure was higher than the reaction pressure, the reaction solution started to be extracted into a gas-liquid separation equipment, the gas was reused, and the liquid was introduced into a flash evaporation tank and removed off the solvent by flash evaporation to obtain polyketone powder with dense and uniform particles, and the solvent was recovered and reused. The obtained polyketone powder has a weight-average molecular weight of 220,000, a molecular weight distribution of 1.8, a bulk density of 0.37 g/ml, a particle size of 10 µm~50 µm, and a particle size distribution width Span of 0.507.

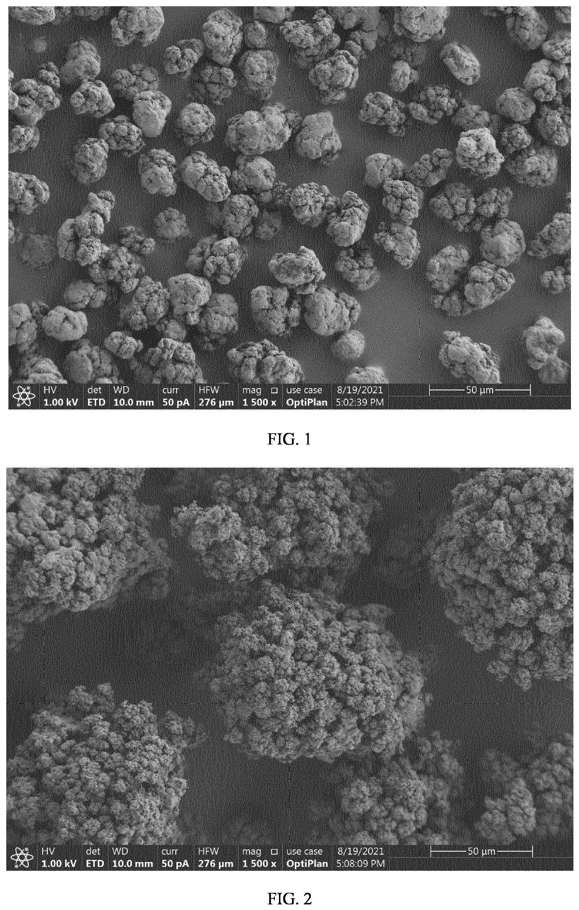

The particle size of the powder is shown in Table 1; the scanning electron microscope image of the powder is shown in FIG. 1.

**Table 1 Particle size distribution data of the polyketone powder prepared in Example 1 of the present disclosure**

| Sample name | Particle refractive index | D₁₀ | D₅₀ | D₉₀ |
|---|---|---|---|---|
| Polyketone powder | 1.5 | 23.2 | 28.0 | 37.4 |

### Comparative Example 1

3.5L methanol solvent, a main catalyst an organometallic complex of 1,3-bis[bis(2-methoxyphenyl)phosphino]propane and palladium acetate 48.58mg, and a cocatalyst trifluoroacetic acid 3.4 mg were added to a 10L autoclave. After the above-mentioned substances were added, the autoclave was introduced with nitrogen for pressure maintaining and replacement, then introduced with 400 g of propylene, and 350 g of a mixed gas of CO and C₂H₄ at a mass ratio of 1:1.1. The reaction system began to be heated up to a set temperature of 95°C. After the temperature was constant, the mixed gas of CO:C₂H₄=1:1.1 was continuously introduced, wherein the reaction pressure was maintained at 3.5MPa~4.0MPa, the stirring speed was 400r/min, and the reaction time was 2h.

After the reaction was completed, the obtained polyketone powder product was filtered, washed with methanol, and then dried under vacuum at 80°C for 3 hours to obtain polyketone powder. The obtained polyketone powder has a weight-average molecular weight of 190,000, a molecular weight distribution of 2.2, a bulk density of 0.18 g/ml, a particle size of 20µm~480µm and a particle size distribution width Span of 3.954.

The particle size of the powder is shown in Table 2; the scanning electron microscope image of the powder is shown in FIG. 2.

**Table 2 Particle size distribution data of the polyketone powder prepared in Comparative Example 1**

| Sample name | Particle refractive index | D₁₀ | D₅₀ | D₉₀ |
|---|---|---|---|---|
| Polyketone powder | 1.5 | 35.1 | 111 | 474 |

### Comparative Example 2

3.5L methanol solvent, a main catalyst an organometallic complex of 1,3-bis[bis(2-methoxyphenyl)phosphino]propane and palladium acetate 48.58mg, and a cocatalyst trifluoroacetic acid 3.4 mg were added to a 10L autoclave. After the above-mentioned substances were added, the autoclave was introduced with nitrogen for pressure maintaining and replacement, then introduced with 400 g of propylene, and 350 g of a mixed gas of CO and C₂H₄ at a mass ratio of 1:1.1. The reaction system began to be heated up to a set temperature of 100°C. After the temperature was constant, the mixed gas of CO:C₂H₄=1:1.05 was continuously introduced, wherein the reaction pressure was maintained at 3.5MPa~4.0MPa, the stirring speed was 400r/min, and the reaction time was 2.5h.

After the reaction was completed, the obtained polyketone powder product was filtered, washed with methanol, and then dried under vacuum at 80°C for 3 hours to obtain polyketone powder. The obtained polyketone powder has a weight-average molecular weight of 179,000, a molecular weight distribution of 2.25, a bulk density of 0.16 g/ml, a particle size of 20µm~480µm and a particle size distribution width Span of 3.371.

The particle size of the powder is shown in Table 3.

**Table 3 Particle size distribution data of the polyketone powder prepared in Comparative Example 2**

| Sample name | Particle refractive index | D₁₀ | D₅₀ | D₉₀ |
|---|---|---|---|---|
| Polyketone powder | 1.5 | 25.8 | 103 | 373 |

### Example 2

A main catalyst an organometallic complex of 1,3-bis[bis(2-methoxyphenyl) phosphino]propane and palladium acetate, a cocatalyst trifluoroacetic acid and a cosolvent carboxylic acid functionalized imidazolium salt were added to a quantitative mixture of methanol and hexafluoroisopropanol (V methanol: V hexafluoroisopropanol=1:4), wherein the concentration of the main catalyst was 0.02mmol/L, the concentration of the cocatalyst was 0.08mmol/L, and the concentration of the cosolvent was 0.2 mmol/L. Before the start of the reaction, a microchannel reactor was introduced with nitrogen for replacement. After the replacement was completed, the heating module of the reactor was heated to 110 °C, and then the reactor (the flux of the reactor was 50 ml) was continuously introduced with the mixed solution at a flow rate of 5 ml/min, propylene at a flow rate of 0.6g/min, and a mixed gas of CO and ethylene at a mass ratio of 1:1.1 at a feeding rate of 30g/min. The system was prepared to a reaction pressure of 6.5MPa~7.0MPa, and the residence time was controlled to be 10min. When the system pressure was higher than the reaction pressure, the reaction solution started to be extracted into a gas-liquid separation equipment, the gas was reused, and the liquid was introduced into a flash evaporation tank and removed off the solvent by flash evaporation to obtain polyketone powder with dense and uniform particles, and the solvent was recovered and reused. The obtained polyketone powder has a weight-average molecular weight of 205,000, a molecular weight distribution of 1.75, a bulk density of 0.38 g/ml, a particle size of 10 µm~50 µm, and a particle size distribution width Span of about 0.776.

The particle size of the powder is shown in Table 4.

**Table 4 Particle size distribution data of the polyketone powder prepared in Example 2 of the present disclosure**

| Sample name | Particle refractive index | D₁₀ | D₅₀ | D₉₀ |
|---|---|---|---|---|
| Polyketone powder | 1.5 | 20.5 | 28.6 | 42.7 |

### Example 3

A main catalyst an organometallic complex of 1,3-bis[bis(2-methoxyphenyl) phosphino]propane and palladium acetate, a cocatalyst trifluoroacetic acid and a cosolvent carboxylic acid functionalized imidazolium salt were added to a quantitative mixture of methanol and hexafluoroisopropanol (V methanol: V hexafluoroisopropanol=1:4), wherein the concentration of the main catalyst was 0.02mmol/L, the concentration of the cocatalyst was 0.08mmol/L, and the concentration of the cosolvent was 0.2 mmol/L. Before the start of the reaction, a microchannel reactor was introduced with nitrogen for replacement. After the replacement was completed, the heating module of the reactor was heated to 100 °C, and then the reactor (the flux of the reactor was 50 ml) was continuously introduced with the mixed solution at a flow rate of 10 ml/min, propylene at a flow rate of 1.2g/min, and a mixed gas of CO and ethylene at a mass ratio of 1:1.1 at a feeding rate of 60g/min. The system was prepared to a reaction pressure of 6.5MPa~7.0MPa, and the residence time was controlled to be 5min. When the system pressure was higher than the reaction pressure, the reaction solution started to be extracted into a gas-liquid separation equipment, the gas was reused, and the liquid was introduced into a flash evaporation tank and removed off the solvent by flash evaporation to obtain polyketone powder with dense and uniform particles, and the solvent was recovered and reused. The obtained polyketone powder has a weight-average molecular weight of 201,000, a molecular weight distribution of 1.95, a bulk density of 0.35 g/ml, a particle size of 10 µm~50 µm, and a particle size distribution width Span of about 0.826.

The particle size of the powder is shown in Table 5.

**Table 5 Particle size distribution data of the polyketone powder prepared in Example 3 of the present disclosure**

| Sample name | Particle refractive index | D₁₀ | D₅₀ | D₉₀ |
|---|---|---|---|---|
| Polyketone powder | 1.5 | 18.1 | 30.5 | 43.3 |

The above are only the preferred embodiments of the present disclosure. It should be noted that for those of ordinary skill in the art, several improvements and modifications can be made without departing from the principles of the present disclosure, which should also be regarded as the protection scope of the present disclosure, which is defined by the appended claims.

## Claims

1. An aliphatic polyketone prepared by continuous solution polymerization process, wherein the aliphatic polyketone is obtained by continuous solution polymerization of carbon monoxide and an olefin compound in a solvent system containing a catalyst; wherein the aliphatic polyketone has a particle size of 10µm~50µm, a particle size distribution width Span of 0.5~0.9, and a bulk density >0.35g/ml.

2. The aliphatic polyketone prepared by continuous solution polymerization process according to claim 1, wherein the solvent system containing a catalyst is a mixed solvent containing a catalyst, a cocatalyst and a cosolvent.

3. The aliphatic polyketone prepared by continuous solution polymerization process according to claim 1, wherein the catalyst is an organometallic complex of a divalent palladium salt and a bidentate phosphine ligand;
the divalent palladium salt is one or more of palladium nitrate, palladium sulfate, palladium sulfonate and palladium acetate;
the bidentate phosphine ligand has a structure as shown in formula (I): 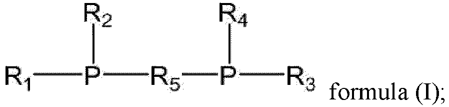
in formula (I), R₁, R₂, R₃ and R₄ are independently selected from phenyl or substituted phenyl, and R₅ is an alkylene group having at least 3 carbon atoms.

4. The aliphatic polyketone prepared by continuous solution polymerization process according to claim 2, wherein the cocatalyst is selected from one or more of sulfuric acid, benzenesulfonic acid, perchloric acid, trichloroacetic acid and trifluoroacetic acid.

5. The aliphatic polyketone prepared by continuous solution polymerization process according to claim 2, wherein the cosolvent is a carboxylic acid-functionalized imidazolium salt, which has a structure as shown in formula (II): 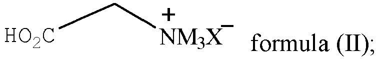 in formula (II), -NM₃ is an imidazole substituent, and X is trifluoroacetate, trifluorosulfonate or hexafluorophosphate.

6. The aliphatic polyketone prepared by continuous solution polymerization process according to claim 2, wherein the mixed solvent is a mixed solvent of o-chlorophenol and methanol, a mixed solvent of m-cresol and methanol, a mixed solvent of hexafluoroisopropanol and methanol or a mixed solvent of DMF and methanol.

7. A method for preparing the aliphatic polyketone according to any of claims 1-6 by continuous solution polymerization process, comprising the following steps:
a) continuously feeding carbon monoxide, an olefin compound and a solvent system containing catalyst into a continuous flow reactor for solution polymerization to obtain an aliphatic polyketone.

8. The method according to claim 7, wherein the solution polymerization reaction in step a) is carried out at a temperature of 100°C~110°C, and a pressure of 6.5MPa~7MPa;
the residence time of the solution polymerization reaction is controlled by controlling the feeding rate of monomer and solvent;
the solution polymerization reaction is carried out using a micro-channel reactor, in which the monomer is continuously feeding, the unreacted monomer is separated and reused, and the product is continuously discharged.

9. The method according to any of claims 7-8, wherein the step a) further comprises:
performing gas-liquid separation on the reaction solution obtained by the polymerization reaction, reusing the gas, and removing the solvent from the liquid to obtain polyketone powder;
a method for removing the solvent is flash evaporation; the recovered solvent can be recycled for use as a mixed solvent.

## Patentansprüche

1. Aliphatisches Polyketon, hergestellt durch ein kontinuierliches Lösungspolymerisationsverfahren, wobei das aliphatische Polyketon durch kontinuierliche Lösungspolymerisation von Kohlenmonoxid und einer Olefinverbindung in einem einen Katalysator enthaltenden Lösungsmittelsystem erhalten wird, wobei das aliphatische Polyketon eine Partikelgröße von 10 µm bis 50 µm, eine Breite der Partikelgrößenverteilung (Span) von 0,5 bis 0,9 und eine Schüttdichte von > 0,35 g/ml aufweist.

2. Aliphatisches Polyketon, hergestellt durch ein kontinuierliches Lösungspolymerisationsverfahren, nach Anspruch 1, wobei das einen Katalysator enthaltende Lösungsmittelsystem ein gemischtes Lösungsmittel ist, das einen Katalysator, einen Co-Katalysator und ein Co-Lösungsmittel enthält.

3. Aliphatisches Polyketon, hergestellt durch ein kontinuierliches Lösungspolymerisationsverfahren, nach Anspruch 1, wobei der Katalysator ein organometallischer Komplex aus einem zweiwertigen Palladiumsalz und einem bidentaten Phosphinliganden ist;
wobei das zweiwertige Palladiumsalz eines oder mehrere ausgewählt aus Palladiumnitrat, Palladiumsulfat, Palladiumsulfonat und Palladiumacetat ist;
wobei der bidentate Phosphinligand eine Struktur gemäß Formel (I) aufweist: 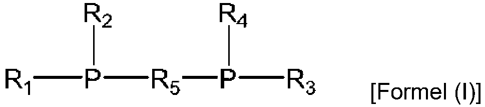
wobei in Formel (I) R₁, R₂, R₃ und R₄ unabhängig voneinander ausgewählt sind aus Phenyl oder substituiertem Phenyl und R₅ eine Alkylengruppe mit mindestens 3 Kohlenstoffatomen ist.

4. Aliphatisches Polyketon, hergestellt durch ein kontinuierliches Lösungspolymerisationsverfahren, nach Anspruch 2, wobei der Co-Katalysator ausgewählt ist aus einem oder mehreren von Schwefelsäure, Benzolsulfonsäure, Perchlorsäure, Trichloressigsäure und Trifluoressigsäure.

5. Aliphatisches Polyketon, hergestellt durch ein kontinuierliches Lösungspolymerisationsverfahren, nach Anspruch 2, wobei das Co-Lösungsmittel ein mit einer Carbonsäure funktionalisiertes Imidazoliumsalz ist, das eine Struktur gemäß Formel (II) aufweist: 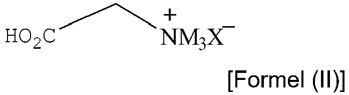 wobei in Formel (II) -NM3 ein Imidazol-Substituent ist und X Trifluoracetat, Trifluorsulfonat oder Hexafluorophosphat ist.

6. Aliphatisches Polyketon, hergestellt durch ein kontinuierliches Lösungspolymerisationsverfahren, nach Anspruch 2, wobei das gemischte Lösungsmittel ein gemischtes Lösungsmittel aus o-Chlorphenol und Methanol, ein gemischtes Lösungsmittel aus m-Kresol und Methanol, ein gemischtes Lösungsmittel aus Hexafluorisopropanol und Methanol oder ein gemischtes Lösungsmittel aus DMF und Methanol ist.

7. Verfahren zur Herstellung des aliphatischen Polyketons nach einem der Ansprüche 1 bis 6 durch ein kontinuierliches Lösungspolymerisationsverfahren, aufweisend die folgenden Schritte:
a) kontinuierliches Zuführen von Kohlenmonoxid, einer Olefinverbindung und einem einen Katalysator enthaltenden Lösungsmittelsystem in einen kontinuierlich durchströmten Reaktor zur Lösungspolymerisation, um ein aliphatisches Polyketon zu erhalten.

8. Verfahren nach Anspruch 7, wobei die Lösungspolymerisationsreaktion in Schritt a) bei einer Temperatur von 100 °C bis 110 °C und einem Druck von 6,5 MPa bis 7 MPa durchgeführt wird;
wobei die Verweilzeit der Lösungspolymerisationsreaktion durch Steuern der Zuführrate des Monomers und des Lösungsmittels gesteuert wird;
wobei die Lösungspolymerisationsreaktion unter Verwendung eines Mikrokanalreaktors durchgeführt wird, in dem das Monomer kontinuierlich zugeführt wird, das nicht umgesetzte Monomer abgetrennt und wiederverwendet wird und das Produkt kontinuierlich ausgetragen wird.

9. Verfahren nach einem der Ansprüche 7 bis 8, wobei Schritt a) ferner aufweist:
Durchführen einer Gas-Flüssig-Trennung an der durch die Polymerisationsreaktion erhaltenen Reaktionslösung, Wiederverwenden des Gases und Entfernen des Lösungsmittels aus der Flüssigkeit, um Polyketonpulver zu erhalten;
wobei ein Verfahren zum Entfernen des Lösungsmittels eine Flash-Verdampfung ist und das zurückgewonnene Lösungsmittel zur Verwendung als gemischtes Lösungsmittel recycelt werden kann.

## Revendications

1. Polycétone aliphatique préparée par un procédé continu de polymérisation en solution, dans laquelle la polycétone aliphatique est obtenue par polymérisation continue en solution de monoxyde de carbone et d'un composé oléfinique dans un système de solvant contenant un catalyseur ; dans laquelle la polycétone aliphatique a une taille de particule de 10 µm à 50 µm, une largeur de distribution de taille des particules (Span) de 0,5 à 0,9, et une masse volumique apparente > 0,35 g/ml.

2. Polycétone aliphatique préparée par un procédé continu de polymérisation en solution selon la revendication 1, dans laquelle le système de solvant contenant un catalyseur est un solvant mixte contenant un catalyseur, un cocatalyseur et un cosolvant.

3. Polycétone aliphatique préparée par un procédé continu de polymérisation en solution selon la revendication 1, dans laquelle le catalyseur est un complexe organométallique d'un sel de palladium divalent et d'un ligand phosphine bidenté ;
le sel de palladium divalent est un ou plusieurs parmi le nitrate de palladium, le sulfate de palladium, le sulfonate de palladium et l'acétate de palladium ;
le ligand phosphine bidenté a une structure telle que représentée dans la formule (I) : 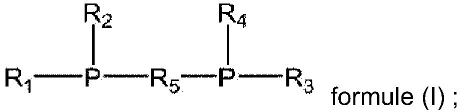
dans la formule (1), R₁, R₂, R₃ et R₄ sont indépendamment choisis parmi un phényle ou un phényle substitué, et R₅ est un groupe alkylène ayant au moins 3 atomes de carbone.

4. Polycétone aliphatique préparée par un procédé continu de polymérisation en solution selon la revendication 2, dans laquelle le cocatalyseur est choisi parmi un ou plusieurs parmi l'acide sulfurique, l'acide benzènesulfonique, l'acide perchlorique, l'acide trichloroacétique et l'acide trifluoroacétique.

5. Polycétone aliphatique préparée par un procédé continu de polymérisation en solution selon la revendication 2, dans laquelle le cosolvant est un sel d'imidazolium fonctionnalisé par un acide carboxylique, qui a une structure telle que représentée dans la formule (II) : 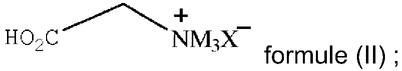 dans la formule (II), -NM₃ est un substituant imidazole, et X est le trifluoroacétate, le trifluorosulfonate ou le hexafluorophosphate.

6. Polycétone aliphatique préparée par un procédé continu de polymérisation en solution selon la revendication 2, dans laquelle le solvant mixte est un solvant mixte d'o-chlorophénol et de méthanol, un solvant mixte de m-crésol et de méthanol, un solvant mixte d'hexafluoroisopropanol et de méthanol ou un solvant mixte de DMF et de méthanol.

7. Procédé de préparation de la polycétone aliphatique selon l'une quelconque des revendications 1 à 6 par un procédé continu de polymérisation en solution, comprenant les étapes suivantes :
a) l'introduction en continu de monoxyde de carbone, d'un composé oléfinique et d'un système de solvant contenant un catalyseur dans un réacteur à écoulement continu pour une polymérisation en solution afin d'obtenir une polycétone aliphatique.

8. Procédé selon la revendication 7, dans lequel la réaction de polymérisation en solution à l'étape a) est réalisée à une température de 100 °C à 110 °C et une pression de 6,5 Mpa à 7 MPa ;
le temps de séjour de la réaction de polymérisation en solution est régulé en régulant le débit d'alimentation en monomère et en solvant ;
la réaction de polymérisation en solution est réalisée à l'aide d'un réacteur à microcanaux, dans lequel le monomère est introduit en continu, le monomère n'ayant pas réagi est séparé et réutilisé, et le produit est évacué en continu.

9. Procédé selon l'une quelconque des revendications 7 à 8, dans lequel l'étape a) comprend en outre :
la réalisation d'une séparation gaz-liquide sur la solution réactionnelle obtenue par la réaction de polymérisation, la réutilisation du gaz, et l'élimination du solvant du liquide pour obtenir une poudre de polycétone ;
un procédé pour éliminer le solvant est l'évaporation flash ; le solvant récupéré peut être recyclé pour une utilisation comme solvant mixte.
